# DEMANDE DE BREVET EUROPEEN

(11) **EP 2 663 036 A1**
(43) Date de publication de la demande: **13.11.2013**
(21) Numéro de dépôt: 13163048.5
(22) Date de dépôt: 10.04.2013
(51) Int. Cl.: H04L 12/58

(54) **Système MMS antispam**

(30) Priorité: 11.05.2012 FR 1254308
(71) Demandeur: Halys, 75015 Paris (FR)
(72) Inventeur: Duporche, Gilles, 75015 Paris (FR); Henry-Labordere, Arnaud, 75007 Paris (FR); Manaï, Waël, 75015 Paris (FR); Mathian, Benoît, 92100 Boulogne Billancourt (FR)
(74) Mandataire: Cabinet HERRBURGER

(57) **Abrégé**

Système AS ayant une fonction d'analyse (F1) de messages SMS envoyés par le centre MMSC et détecter le champ caractéristique (port 2948) d'un SMS de notification, une fonction de lecture (F2) de lecture du message MMS à l'adresse URL, une fonction d'analyse (F3) du contenu MMS récupéré et une fonction de décision (F4) selon le résultat bon ou mauvais pour, s'il y a un MMS spam, accuser réception (6) au MMSC et effacer le MMS, soit transmettre le message SMS de notification au véritable destinataire qui lance alors la procédure de récupération du message MMS au centre MMSC.

## Description

### Domaine de l'invention

La présente invention concerne un système destiné aux opérateurs de mobiles pour le filtrage des « spam MMS » (« pourriels » de messages multimédia (texte, image, son)) en extension de leur système d'anti-spam de SMS (« messages courts » encore appelés « texto »).

Depuis plusieurs années de nombreux opérateurs fournissent le service « SMS antispam » pour éviter que leurs utilisateurs reçoivent des SMS avec un contenu non désiré (publicité agressive, injures, etc..). Mais ces systèmes ne sont pas capables de filtrer les MMS dont la transmission fonctionne différemment.

### Etat de la technique

Les systèmes de SMS antispam sont connus et reposent sur l'envoi par les registres HLR ou par des « mandataires » d'une fausse adresse de centre MSC visité en réponse à l'interrogation de localisation faite par les centres SMSC distants. Cela consiste à envoyer un "SEND_ROUTING_INFO_FOR_SM_request") par le centre SMSC vers le registre HLR du destinataire. Cette fausse adresse, ainsi qu'éventuellement un faux numéro d'abonné IMSI est renvoyée dans la réponse "SEND_ROUTING_INFO_FOR_SM"_confirmation.

Cette fausse adresse est celle d'un équipement effectuant le filtrage des messages SMS.

Le centre SMSC distant transmet donc le message SMS vers cet équipement qui contrôle les origines, les répétitions et peut filtrer le contenu textuel avec le même type de logiciel communément utilisé pour le filtrage des messages envoyés par courriels.

Pour les messages MMS, cette procédure n'est pas applicable. La transmission des messages MMS vers un destinataire commence par un message SMS de « notification de MMS » contenant l'adresse URL vers le centre MMSC émetteur de ce message SMS de notification. Le mobile qui reçoit ce message MMS, se connecte alors à cette adresse URL de ce centre MMSC à travers le « réseau paquet GPRS » et il lit le message MMS par la requête "HTTP GET" de son navigateur. La plupart du temps le centre MMSC appartient à son opérateur et n'est pas accessible depuis Internet, seulement depuis l'Internet privé des opérateurs de mobile (appelé GRX). Le contenu du SMS de notification est court et contient essentiellement l'URL, mais en aucun cas le contenu du message MMS.

Le centre MMSC de l'opérateur est standard dans la plupart des cas et il n'est pas équipé pour faire la fonction antispam à la source. De même, il est assez souvent possible à des centres MMSC externes d'envoyer directement des messages MMS vers les abonnés d'autres réseaux mais dans ce cas aussi le traitement anti-spam doit être fait dans le réseau de l'abonné HPLMN.

Il se développe actuellement des « clients » pour Smartphone qui seraient capables de détecter des spams MMS reçus. Cette approche a l'inconvénient que quand le destinataire est à l'étranger la réception des messages MMS lui est facturée au tarif « data » ce qui est très désagréable s'il s'agit d'un spam.

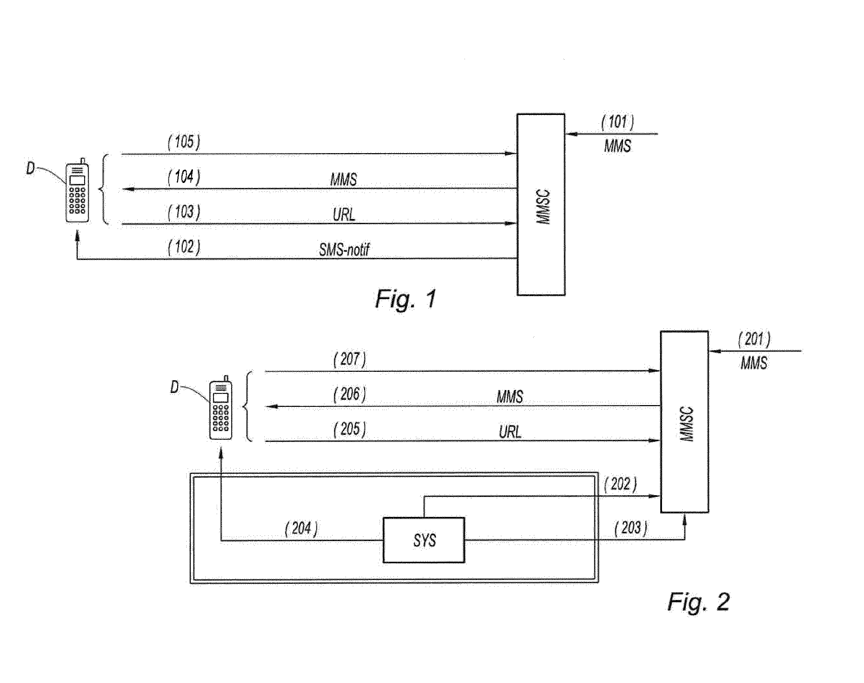

La transmission d'un message MMS directement si le réseau de l'abonné (D) n'a pas de système antispam SMS sera décrit ci-après à l'aide de la figure 1 et le cas de la transmission d'un message MMS dans le cas d'un réseau assurant le service antispam de message SMS sera décrit à l'aide de la figure 2.

La procédure actuelle de transmission de message MMS (Fig.1) est la suivante:
101) Le message MMS arrive dans le centre de messagerie multimédia MMSC.
102) Le centre MMSC émet un message SMS de notification (SMS-notif) vers le destinataire (D) du message MMS. Ce message SMS-notif contient l'adresse URL du message MMS.
103) Le destinataire (D) (mobile destinataire) va à l'adresse URL pour chercher le message MMS.
104) Le destinataire (D) reçoit le message MMS.
105) Le destinataire (D) envoie en retour un accusé réception AR du message MMS au centre MMSC.
   La procédure dans un réseau assurant la protection antispam de message SMS est la suivante:
   La transmission du message MMS se fait comme cela est décrit schématiquement à l'aide de la figure 2:
201) Le message multimédia MMS arrive dans le centre MMSC.
202) Le centre MMSC envoie un message SMS de notification (SMS-notif) vers le système antispam SYS.
203) Le système antispam SYS analyse le message SMS-notif. Ce message SMS-notif sera nécessairement normal puisqu'il s'agit d'un message SMS ne venant pas d'une origine quelconque mais du centre MMSC avec l'adresse de l'émetteur du message SMS qui est celle du centre MMSC. SYS n'analyse pas le champ « Port 2948 »qui distingue un message SMS normal d'un message SMS de notification.
   En d'autres termes, le système SYS considère que le message SMS de notification est un message SMS normal. Il applique les critères de contrôle antispam, à savoir vérification de l'adresse de l'émetteur ; cette adresse est en l'occurrence celle du centre MMSC qui n'est pas bien sûr sur la liste noire.
   Le système SYS n'analyse pas le contenu du texte du message SMS. Même s'il l'analysait, il n'y trouverait aucun des termes anormaux provoquant le rejet d'un message SMS.
   Cette procédure antispam de message SMS n'assure aucune protection contre les messages MMS spam.
204) SYS transmet ce message SMS-notif au destinataire (D).
205) Le destinataire (D) va à l'adresse URL indiquée dans le message SMS.
206) Le destinataire (D) reçoit ainsi le message MMS.
207) Le destinataire (D) accuse réception du message MMS au centre MMSC.

### But de l'invention

La présente invention a pour but de développer un système permettant de déceler les messages MMS spam et de les écarter pour ne pas les transmettre à l'abonné destinataire.

### Exposé et avantages de l'invention

A cet effet, l'invention a pour objet un système antispam pour des messages MMS, pour rejeter les messages MMS indésirables destinés à un mobile (D), le centre de messagerie multimédia MMSC à la réception d'un message MMS, envoyant un SMS de notification (SMS-notif) à l'abonné (D) avec l'adresse URL du message MMS pour que l'abonné puisse récupérer le message MMS et acquitter sa réception au centre MMSC.Ce système est interposé entre le centre MMSC et le mobile (D) de l'abonné pour filtrer la transmission des MMS vers le mobile de l'abonné,
* ce système AS ayant en entrée :
   - une fonction d'analyse de messages SMS (F1) pour détecter dans le message SMS envoyé par le centre MMSC le champ caractéristique (port 2948) d'un message SMS de notification d'une adresse URL,
   - une fonction de lecture du message MMS (F2) à l'adresse URL contenue dans le message SMS de notification de l'adresse URL du message MMS,
   - une fonction d'analyse du contenu (F3) (texte, image, son) du message MMS récupéré par le système AS,
   - une fonction de décision (F4) selon le résultat (bon/mauvais) de la fonction d'analyse de contenu au centre MMSC pour
      o acquitter (F41) la réception du message MMS au centre MMSC si l'analyse a montré que le message MMS était de type spam et ainsi effacer le message MMS dans le centre MMSC,
      o transmettre (F42) le message SMS de notification au mobile (D) de l'abonné si l'analyse ne révèle pas d'élément négatif dans le message MMS reçu pour le système AS,
   - l'abonné (D) récupérant le message MMS à l'adresse URL et confirmant la lecture au centre MMSC.

Le système antispam MMS permet de filtrer les messages MMS pour éliminer les messages spam, de manière simple et efficace sans pénaliser le destinataire ou l'abonné.

### Dessins

La présente invention sera décrite de manière plus détaillée à l'aide d'un mode de réalisation d'un système antispam de messages MMS représenté dans les dessins annexés dans lesquels :
- la figure 1 est un schéma de la transmission d'un message MMS vers un mobile M sans contrôle de conformité du message MMS,
- la figure 2 est un schéma de la transmission d'un message MMS vers un abonné d'un réseau bénéficiant de la protection antispam des messages SMS,
- la figure 3 est un schéma d'un système antispam de messages MMS selon l'invention,
- la figure 4 est un schéma détaillé des différentes opérations de contrôle effectuées par le système antispam selon l'invention.

### Description de modes de réalisation de l'invention

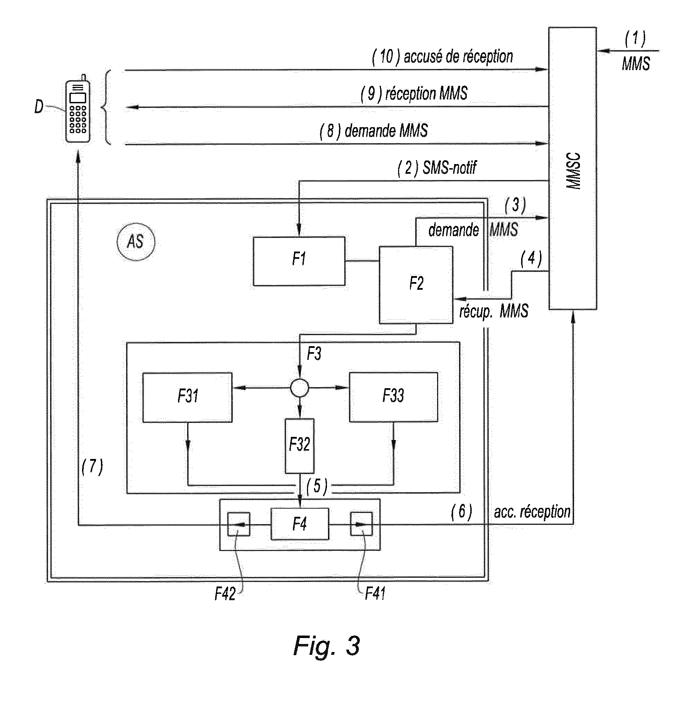

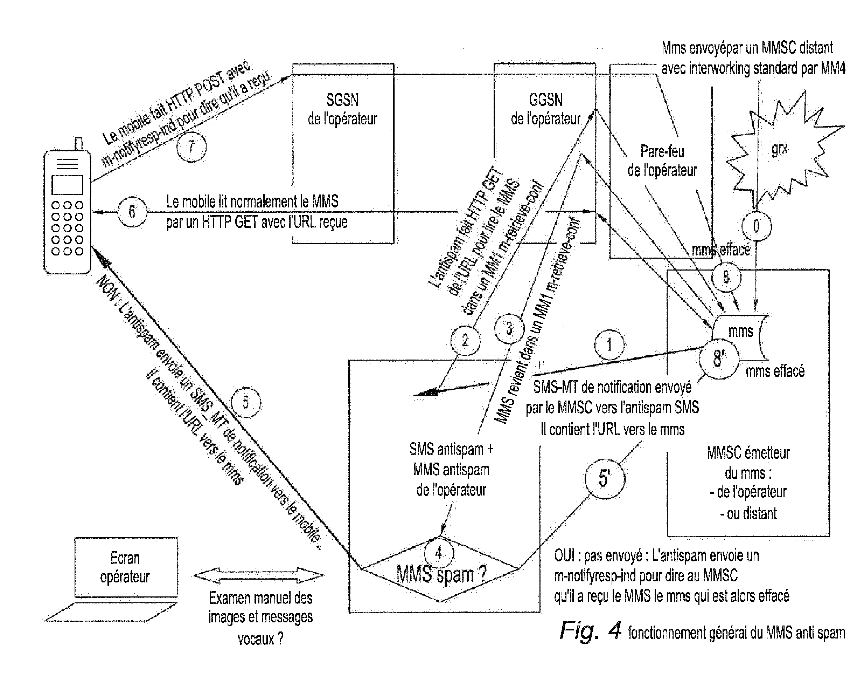

Un système de contrôle antispam (AS) de messages MMS sera décrit ci-après à l'aide de la figure 3 dans sa généralité et de façon plus détaillée à l'aide de la figure 4.

Selon la figure 3, le système antispam AS pour des messages MMS a pour but de rejeter les messages MMS indésirables destinés à un mobile (D). Le message MMS arrive au centre de messagerie multimédia MMSC qui ne le transmet pas directement à l'abonné (D) mais l'envoie au système antispam MMS (AS) pour filtrer les messages MMS. Le système AS a en entrée une fonction F1 d'analyse des messages SMS pour détecter les messages SMS spam ou détecter les messages SMS-notif qui sont des messages de notification d'un message MMS à destination d'un abonné (D). Cette fonction d'analyse F1 détecte le champ caractéristique (port 2948) contenu dans un message SMS-notif qui notifie l'arrivée d'un message MMS dans le centre MMSC. Ayant détecté que le message SMS était un message SMS-notif, le système actionne une fonction F2 de lecture du message MMS à l'adresse URL contenue dans le message SMS-notif. Cette fonction F2 en aval de la fonction F1 appelle le message MMS dans le centre MMSC. F2 se comporte comme un mobile (terminal mobile) et son point d'accès au réseau paquet de l'opérateur (SGSM) c'est-à-dire que la fonction F2 constitue un simulateur de terminal + GSM qui effectue une requête de demande (3) du MMS et reçoit (4) le MMS.

En retour à cette demande, le centre MMSC envoie au système AS le message MMS. Ce message MMS est reçu par la fonction d'analyse de contenu F3 destinée à analyser le texte, les images et le son des informations contenues dans le message MMS ainsi récupéré. Ces analyses se font en parallèle par des sous-fonctions F31, F32, F33. L'analyse peut se limiter à l'une ou deux des fonctions, le texte, l'image ou le son.

Dans le cas de l'image, l'analyse peut être faite automatiquement ou par un contrôle visuel par un opérateur.

En aval de la fonction d'analyse F3, le système AS comporte une fonction de décision F4 qui reçoit les conclusions de la fonction d'analyse F3 (ou de ses sous-fonctions F31, F32, F33) pour appliquer des critères de décision et considérer le message MMS comme bon ou comme mauvais contenant un éventuel spam.

La fonction de décision F4 se compose de deux sous-fonctions F41 ou F42. La sous-fonction F41 acquitte la réception en envoyant un message de confirmation de lecture du message MMS au centre MMSC que si la conclusion de la fonction d'analyse F3 est que le message MMS ne doit pas être transmis à l'abonné (D). L'envoi de ce message de confirmation de lecture au centre MMSC supprime automatiquement le message MMS dans le centre MMSC. Il ne sera donc jamais répété.

La sous-fonction F42 assure la transmission du message SMS-notif au mobile (D) si la fonction d'analyse F3 a jugé que le message MMS n'était pas à rejeter.

L'abonné (D) reçoit le message SMS-notif et pourra alors demander sous l'adresse URL contenue dans le SMS-notif l'envoi du message MMS au centre MMSC qui envoie en retour le message MMS au mobile (D). Celui-ci confirme la lecture du message au centre MMSC qui efface le message MMS.

La procédure appliquée par le système AS antispam MMS selon l'invention peut également se décrire comme suit pour le cheminement référencé des messages et des informations:
(1) Le message MMS arrive dans le centre MMSC.
(2) Le centre MMSC envoie un message SMS de notification (SMS-notif) vers le système antispam MMS (AS).
   La fonction F1 du système AS analyse le message SMS-notif comme un message SMS quelconque :
   Le message SMS-notif est un message SMS de notification de message MMS de sorte que, dans son format, le champ « Port 2948 » est activé.
   La fonction F1 du système AS qui, a priori, ne sait pas si le système a reçu un message SMS normal ou un message SMS de notification, analyse le message SMS et constate que le « Port 2948 » est activé. Cela signifie pour lui qu'il s'agit d'un message SMS de notification d'un message MMS.
(3) Le système AS, par sa fonction de simulation F2, lit le contenu de l'adresse URL indiquée dans le message SMS-notif.
(4) Le système AS reçoit le message MMS dans la réponse mais n'accuse pas réception du message MMS.
   La fonction d'analyse de contenu F3 du système AS analyse (F31, F32, F33) le contenu du message MMSC pour contrôler le texte (F31), l'image (F32) et/ ou le son (F33).
(5) Le résultat de l'analyse est transmis (5) à la fonction de décision F4.
(6) Si la fonction F4 estime que le message MMS n'est pas conforme, sa sous-fonction F41 accuse réception en confirmant la lecture au centre MMSC ce qui entraîne automatiquement l'effacement du message MMS. Celui-ci n'est donc pas transmis à l'abonné (D).
(7) Si le contenu du message MMS est conforme, la sous-fonction (F42) de la fonction de décision F4 transmet au destinataire (D) (mobile D), le message SMS-notif avec l'adresse URL.
(8) Le destinataire (D) lit le contenu de l'adresse URL pour recueillir le message MMS.
(9) Le centre MMSC envoie (7) le message MMS au destinataire (D).
(10) Le destinataire (D) accuse réception du message MMS en envoyant (8) un message de lecture au centre MMSC et ce dernier efface automatiquement le message MMS.

La figure 4 représente le fonctionnement général du système MMS anti-spam. Les équipements représentés SGSN, GGSN; antispam appartiennent au réseau de l'opérateur de service qui fournit le service antispam MMS. Cette figure correspond à l'interaction classique « interworking MMS » où le message MMS contenant éventuellement du spam est envoyé par le centre MMSC distant vers le centre MMSC de l'opérateur par le protocole MM4.

Dans le schéma de la figure 4, le centre MMSC émetteur du message MMS peut être:
- soit le centre MMSC de l'opérateur,
- soit un centre MMSC distant,
qui serait autorisé à envoyer des « MMS directs » vers les abonnés par des messages SMS de notification MMS directs. Le système MMS antispam objet de l'invention, protège aussi contre ces messages MMS envoyés directement depuis des centres MMSC distants (en protocole MM1) et aussi contre les spams transmis en protocole MM4 depuis les centres MMSC distants vers le centre MMSC de l'opérateur.

La réception forcée des messages SMS par l'antispam SMS est supposée préexister chez l'opérateur comme décrit dans l'état de la technique. La protection contre le spam MMS repose sur le fait que tous les messages SMS (y compris donc les notifications de messages MMS), qu'ils viennent du MMSC de l'opérateur ou d'un MMSC distant (ce n'est pas la procédure de MMS interworking standard) sont routés vers le système antispam SMS. Normalement, le portail GGSN de l'opérateur associé à un pare-feu, interdit aux abonnés d'accéder à des centres MMSC autres que celui de l'opérateur. Mais si ce pare-feu n'existe pas le système protégerait aussi dans ce cas.

Dans le cas classique, un centre MMSC distant envoie un message MMS vers le centre MMSC de l'opérateur par le procole MM4 de « MMS interworking » utilisant le protocole de mail SMTP (Etape 0).

Le centre MMSC de l'opérateur envoie un message « SMS de notification MMS » vers son abonné, (étape 1), que le système antispam SMS reroute vers l'équipement SMS antispam combiné avec le système MMS antispam objet de l'invention.

Le système antispam SMS reconnaît qu'il s'agit d'un « SMS de notification » car le PORT SMS utilisé est le port 2948. Le système supplémentaire antispam MMS décode le message complètement ; il est de type "MM1 m-notification-ind" et contient l'adresse URL vers le centre MMSC émetteur et permet de lire le message MMS.

Le système antispam MMS comporte aussi un « émulateur de terminal + SGSN » qui lui permet de se déguiser en mobile comme s'il avait reçu ce SMS de notification. Cet émulateur fabrique le dialogue provenant du vrai terminal en étape 2. Il établit donc d'abord un « PDP Contexte » avec le portail GGSN correspondant à l'APN MMS (qui a été configurée dans le système antispam MMS).

L'adresse APN pour le service MMS est obtenue par un plan de numérotation général IMSI->APN pour le service MMS, l'IMSI de l'abonné ayant été reçu comme un des paramètres du SMS de notification MMS reçu. Ce paramètre figure dans le SMS-MT reçu. Le système est donc multi-opérateurs (peut être partagé plusieurs opérateurs » grâce au plan de numérotation. Si le numéro d'abonné MSISDN est obligatoire pour le GGSN considéré, il peut être obtenu avec le protocole MAP par différents moyens classiques à partir de l'IMSI (MAP SEND IMSI, MAP RESTORE DATA).

Puis à travers le tunnel en protocole GTP-U, il lit le message MMS dans le centre MMSC avec une requête HTTP GET. La réponse, (étape 3), est contenue dans le message "MM1-m-retrive-conf" du protocole MM1 standard. La lecture du message MMS suit donc exactement le même chemin, comprenant éventuellement un pare-feu, que sa lecture par le mobile réel à l'étape 6 ultérieure. Si le message MMS reçu est envoyé en direct (par MM1) par un centre MMSC distant et que le pare-feu laisse passer l'accès en lecture au centre MMSC distant, il le laissera aussi passer pour la lecture par le système antispam MMS.

Mais une fois le message MMS lu, le système MMS antispam ne renvoie pas de message "MM1-m-notifyresp-ind" au centre MMSC de façon à ce que celui-ci ne l'efface pas encore. Cette étape est capitale.

Le système MMS anti-spam (étape 4) peut décoder le contenu du MMS (format MIME) pour extraire la partie texte si elle existe et la traiter avec le logiciel d'antispam texte classique. Si une image est contenue, il peut estimer comme dans certains pays que c'est illégal et barrer le MMS en ne transmettant pas la notification au mobile. Il peut aussi le présenter à un opérateur qui examine l'image et les messages vocaux et décide de la conformité.

1er cas : si le contenu est reconnu conforme soit d'une façon automatique soit par examen manuel, le message « SMS de notification » est transmis vers le mobile destinataire à travers le centre MSC visité connu du système SMS antispam associé, à l'étape 5. Ce message SMS-MT est identique à celui de l'étape 1, si ce n'est qu'éventuellement le numéro IMSI déguisé de l'étape 1 est remplacé par le vrai numéro IMSI. Celui-ci récupère classiquement le message MMS qui n'avait pas été effacé puisque le message "MM1-m-notifyresp-ind" n'avait pas été envoyé au centre MMSC.

Le mobile récupère classiquement le message MMS en utilisant l'adresse URL comme indiqué à l'étape 6, à travers le SGSN visité et le portail GGSN. L'ayant reçu il envoie automatiquement un accusé de réception vers le centre MMSC (étape 7) par un message "m-notifyresp-ind" du protocole MMS. En général, comme le message MMS a été reçu, le centre MMSC efface le message MMS (étape 8).

2ème cas : il s'agit d'un spam. Le système MMS antispam n'envoie pas le message SMS de notification vers le terminal. Au lieu de cela, il se « déguise en terminal » de nouveau, envoie (étape 5') un message "MM1 m-notifyresp-ind" vers le centre MMSC contenant le « Message ID » du message MMS qu'il avait extrait du MMS reçu à l'étape 3. Le centre MMSC efface alors le message MMS (étape 8').

### Détail du système MMS antispam

Intégré en extension d'un système SMS antispam, il inclut le Protocole MAP du standard GSM (standard 3GPP TS 29.002) qui est nécessaire pour recevoir ou envoyer le message SMS-MT de notification (étapes 1 et 5).

Mais il intègre aussi un simulateur de fonction SGSN et terminal utilisé à l'étape 2 ou 5'. Pour dialoguer avec le centre MMSC émetteur il dispose du protocole GPP (standard 3GPP TS 29.060) comportant GTP-C pour établir un contexte et un tunnel avec la fonction GGSN. Et aussi d'un émulateur de terminal qui sert à l'étape 2 pour encapsuler l'adresse URL vers le centre MMSC dans un paquet IP et l'envoyer vers la fonction GGSN (ceci est le protocole GTP-U qui fait partie du système). L'émulateur de terminal sert aussi à recevoir la réponse 3 et à la désencapsuler de façon à extraire le message MMS qui est contenu dans un message "MM1 m-retrieve-conf".

Pour l'analyser, et en extraire aussi le Message-ID (qui sert pour le message "MM1 M-notifyresp-ind"), il dispose donc du protocole MM1 (défini dans le standard 3GPP TS 23.140) qui est utilisé à l'étape 2 et à l'étape 5' quand un spam est détecté.

Le système MMS antispam combine donc certaines fonctions d'un centre SMSC, d'un système SGSN, d'un terminal mobile et d'un centre MMSC, toutes indispensables pour le fonctionnement

Le système protège aussi efficacement contre les « MMS spam directs » qu'il existe un pare-feu après le portail GGSN ou pas, pour empêcher l'accès des abonnés à d'autres centres MMSC que le leur. Si ce pare feu existe, le service MMS antispam à l'étape (6) ne pourra lire le message MMS sur le centre MMSC émetteur distant. Il peut conclure « pas de spam » puisque le mobile à l'étape 6 ne pourra le lire. S'il n'y a pas de pare-feu, le système MMS antispam pourra lire le message MMS et procéder à son traitement normal comme quand le message MMS vient du centre MMS de l'opérateur.

Un avantage important est que le système MMS antispam ne coûte rien à l'abonné qui en bénéficie. En effet à l'étape 2-3, le système MMS antispam utilise les numéros IMSI et MSISDN de l'abonné pour se connecter localement au portail GGSN de l'opérateur et lire une 1ère fois le message MMS. La réception locale de ce message MMS est gratuite puisque le système d'antispam est dans le registre HPLMN. Bien entendu si le message MMS, après contrôle, est reçu par un abonné à l'étranger, il sera facturé au tarif « données » ce qui peut être assez coûteux.

### Description de l'automatisation de l'analyse du contenu d'un message MMS

Le message MMS est reçu dans un message « MM1 m-retrieveconf » du protocole MMS. Il est codé en MIME et le système MMS antispam le décode et peut l'afficher éventuellement sur un terminal écran pour le contrôle manuel. Le message MMS est codé en MIME et comprend 3 parties, la PARTIE 0 est une image fixe, la PARTIE 1 est du texte et la PARTIE 2 est codée en « smil »(le standard utilise des mots anglais). Elle formate l'affichage du message MMS.

L'exemple donné ci-après est présenté selon la terminologie et la syntaxe usuelles dans ce domaine, considérées comme relevant des connaissances usuelles de l'homme du métier et pour lesquelles il n'existe pas de traduction. D'ailleurs, toute traduction qui serait faite n'aurait pas de sens pour l'homme du métier.

```
 X_Subject(for mail):TR: Workshop SS7 Jakarta 28 and 29 march
 X-Message-Class:(80) Personal
 X-ms-Priority:Normal
 X-ms-Sender-Visibility:Show
 X-Mms-Delivery-Report(report asked by Sender):YES
 X-Mms-Read-Reply(report asked by Sender):YES
 X-Content-type(84): HEADER WAP, lengthtot(with length) 34 length 32
 (b3) application/vnd.wap.multipart.related:
 (8a)Start: <842921564>
 (89)Type: application/ smil
 AFFICHAGE DU MIME MM1(WAP coding,see WAP-230 specs); Num-
 ber_of_parts= 3
```

```
 <PART # 0>
 <HEADER PARTIE 0>
 [9E]image / jpeg
 (85)File Name: 29032012438.jpg
 (8E)Content-id: 29032012.jpg
 </HEADER PARTIE# 0>
 <BODY PARTIE# 0>
 binary: not printed!
 </BODY PARTIE# 0>
```

```
 <PARTIE # 1 >
 <HEADER PARTIE# 1>
 [83]text/plain
 (81)Charset:
 [EA]utf-8
 (85)File Name:The attendees ar.txt
 (8E)Content-id: The_atte.txt
 </HEADER PARTIE# 1>
 <BODY PARTIE# 1>
 Les participants autour de la table. A la fin un exercice pratique de con-
 version de traces MMS a été fait. Ils ont pu voir le détail du format MIME.
 Le MMS a été pris par Marcel.
 </BODY PARTIE# 1>
```

```
 <PARTIE # 2>
 <HEADER PARTIE# 2>
 application/ smil
 (81)Charset:
 [EA]utf-8
 (85)File Name: pres.smil
 (CO)Content-ID: "<842921564>
 </HEADER PARTIE# 2>
 <BODY PARTIE# 2>
 <smil>
  <head><layout><root-layout width="502" height="2888"/>
  <region id="Image" width="249" height=" 187" top="89" left=" 127"
  fit="meet"/>
  <region id="Text" width="468" height="68" top=" 14" left="7"
  fit="scroll" / >< / layout>
  </head>
 <body><par dur="5000ms">
  <img region="Image" src="29032012.jpg"/><text region="Text"
     src="The_atte.txt"/></par>
 </body>
 < / smi>
 </BODY PARTIE# 2>
```

L'analyse du contenu de la PARTIE 1 (texte) peu être contrôlée par un logiciel antispam classique (mots clés, « filtres Bayésiens », etc..). Il pourrait aussi y avoir d'autres PARTIES avec des messages vocaux. Il est pratiquement impossible de faire une analyse automatique de contenu, d'où l'utilité du terminal-écran avec suffisamment de personnels pour les clients qui ont choisi le service de filtrage MMS. Par contre si la transmission d'images fixes ou animées est totalement interdite, on peut classer automatiquement de tels MMS en «spam ».

Ainsi en résumé, selon l'invention :
Le système de MMS antispam comporte un système SMS antispam relié au réseau en protocole MAP, un émulateur de SGSN et de mobile non transparent, et il assure une analyse du contenu du MMS. L'émulateur de SGSN et de terminal permet au système MMS antispam de se comporter comme un mobile destinataire du MMS pour le lire : le valider ou le filtrer avant qu'il soit transmis au mobile destinataire évitant de transmettre des MMS « spam » coûteux à des abonnés à l'étranger.

L'émulateur de SGSN et de terminal utililise pour réaliser la connexion au MMSC, l'adresse IMSI du mobile (D), soit directement reçue dans le SMS de notification soit retrouvée à partir des tables de la fonction SMS antispam, et le point d'accès APN du service MMS grâce à un plan de numérotation des numéros IMSI vers le point d'accès APN MMS contenu dans le système.

L'émulateur de mobile est non transparent afin que l'antispam MMS puisse être transparent. Il est non transparent en ce que, à la différence du vrai mobile, après la lecture réussie du message MMS pour la détection de spam éventuel, le système d'antispam MMS (AS) n'envoie pas de message de confirmation de lecture m-notifyresp-ind vers le centre MMSC, ce qui fait que le message MMS n'est pas effacé du centre MMSC et peut être relu par le vrai mobile (D) dans la suite de la procédure.

Le système d'antispam SMS fonctionne aussi bien que le message MMS arrive classiquement par MM4 vers le centre MMSC de l'opérateur ou en envoi direct du SMS de notification par un centre MMSC distant.

Enfin, il faut souligner que le système (AS) selon l'invention permet la gratuité de la fonction d'antispam réalisée dans le HPLMN, y compris si l'abonné destinataire est à l'étranger, quand le MMS est détecté "spam"

L'invention s'applique à des réseaux 2.5G et 3G et aussi 4G. Pour Le RESEAU 4G, il peut exister aussi le service MMS s'appuyant sur le « mode Circuit en secours » (Circuit Fall Back en anglais). Dans la description ci-dessus, il faut alors remplacer SGSN par MME et GGSN par portail PDN.

### NOMENCLATURE

- APN: Access Point Name : nom du GGSN pour le service, notamment le service MMS.
- HLR: Home Location Register : Registre de Localisation des abonnés mobiles.
- HPLMN: "Home Public Mobile Network", le réseau de l'abonné qui lui fournit le service de MMS antispam, y compris venant de réseaux qui enverraient directement des MMS sans passer par le relai MM4 de MMSC à MMSC.
- IMSI: "International Mobile Subscriber Identity": numéro d'abonné dans la carte SIM, complètement indépendant du MSISDN de l'abonné. Il est reçu dans un SMS-MT.
- ISUP: "ISDN User Part", réseau téléphonique utilisé à l'international ou pour les services vocaux des opérateurs de mobile. Ce réseau relaie la signalisation RNIS (ISDN en anglais) qui est une signalisation de raccordement direct d'abonnés et a des possibilités plus limitées.
- SGSN: Servicing GPRS Service Node (fonction d'un MME en 4G). Système auquel est attaché un mobile pour le service de données par paquet.
- SMS-MT: SMS Mobile Terminated, envoyé notamment par un MMSC pour fournir l'URL vers le message MMS à lire.
- GGSN: (2G - 3G) ou PDN Gateway (4G): portail GPRS.
- GRX: Internet privé des opérateurs de mobiles reliant leurs GGSN.
- MAP: "Mobile Application Part", standard GSM pour la transmission de signalisation et messages.
- MIME: Multipurpose Internet Mail Extensions : Standard permettant de formater des courriels multimédia.
- MME: Equivalent 4G (LTE) d'un SGSN.
- MM1: Protocole de transmission de MMS entre un mobile et son centre MMSC fonctionnant sur le réseau paquet à travers le SGSN visité, le GGSN et le MMSC.
- MM4: Protocole de transmission de MMS utilisant le transport de mail SMTP pour relayer les MMS d'un MMSC à un autre ; mécanisme normal de "MMS interworking"pour l'échange de MMS entre réseaux.Comprend MM4-Forward-Req, MM4-Forward-Res, MM4-Delivery-Report-Req, MM4-Delivery-Report-Res, etc... chacun envoyé par un « mail » entre MMSC émetteur et récepteur.
- MMSC: Multi Media Messaging Centre.
- MSC: Message Switching Center : Commutateur des réseaux de mobiles fournissant le service « circuit ».
- MSISDN: Numéro de Mobile habituel.
- PDN: Gateway Equivalent 4G d'un GGSN.
- SMIL: Synchronized Multimedia Integration Language. Standard pour le formatage des MMS.
- SMTP: Small Message Transfer Protocol : le protocole d'envoi de courriels (utilise le port standard 25).
- SPAM: "pourriel en français", message parasite.
- SS7: "Signaling System N°7", réseau de signalisation mondial pour la transmission de messages surtout entre opérateurs de mobiles.
- URL: Uniform Resource Locator. Dans le cas des SMS de notification, cette adresse est typiquement de la forme mms.mobile.gprs/MMSC/m1_20120401_073135_189672015 526.0.wml. Où mms.mobile.gprs/MMSC désigne une adresse INTERNE du MMSC atteignable seulement par le GGSN de l'opérateur et 1_20120401_073135_189672015526.0.wml est le nom du fichier contenant le MMS.

## Revendications

1. Système antispam AS pour des messages MMS, pour rejeter les messages MMS indésirables destinés à un mobile (D), le centre de messagerie multimédia MMSC à la réception d'un message MMS, envoyant un SMS de notification (SMS-notif) à l'abonné (D) avec l'adresse URL du message MMS pour que l'abonné puisse récupérer le message MMS et acquitter sa réception au centre MMSC,
système antispam AS de MMS **caractérisé en ce qu'**
il est interposé entre le centre MMSC et le mobile (D) de l'abonné pour filtrer la transmission des MMS vers le mobile de l'abonné,
* ce système AS ayant en entrée :
- une fonction d'analyse (F1) de messages SMS pour détecter dans le message SMS envoyé par le centre MMSC, le champ caractéristique (port 2948) d'un message SMS de notification d'une adresse URL,
- une fonction de lecture (F2) du message MMS à l'adresse URL contenue dans le message SMS de notification de l'adresse URL du message MMS,
- une fonction d'analyse (F3) du contenu (texte, image, son) du message MMS récupéré par le système AS,
- une fonction de décision (F4) selon le résultat (bon/mauvais) de la fonction d'analyse de contenu au centre MMSC pour
o acquitter(F41) la réception du message MMS au centre MMSC si l'analyse a montré que le message MMS était de type spam et ainsi effacer le message MMS dans le centre MMSC,
o transmettre (F42) le message SMS de notification au mobile (D) de l'abonné si l'analyse ne révèle pas d'élément négatif dans le message MMS reçu pour le système AS,
- l'abonné (D) récupérant le message MMS à l'adresse URL et confirmant la lecture au centre MMSC.

2. Système antispam pour les messages MMS selon la revendication 1, **caractérisé par**
un simulateur de terminal et de point d'accès(SGSN) au réseau paquet de l'opérateur, le SGSN étant utilisé pour réaliser la connexion au centre MMSC, l'adresse APN pour le service MMS étant obtenue par un plan de numérotation général IMSI->APN pour le service MMS, l'IMSI de l'abonné ayant été reçu comme un des paramètres du SMS de notification MMS reçu.

3. Système antispam selon la revendication 1,
**caractérisé en ce que**
le simulateur de mobile est non transparent pour que l'antispam MMS puisse être transparent, et à la différence du vrai mobile, après la lecture réussie du message MMS pour la détection d'un spam éventuel, le système AS n'envoie pas de message de confirmation de lecture vers le centre MMSC, ce qui fait que le MMS n'est pas effacé du centre MMSC et peut être relu par le vrai destinataire (vrai mobile) dans la suite de la procédure.

4. Système antispam selon la revendication 1,
**caractérisé en ce que**
le système antispam SMS fonctionne aussi bien pour un message MMS arrivant classiquement par MM4 vers le centre MMSC de l'opérateur, soit par envoi direct du SMS de notification par un centre MMSC distant.
